# EUROPEAN PATENT APPLICATION

(11) **EP 4 632 674 A1**
(43) Date of publication of application: **15.10.2025**
(21) Application number: 24169376.1
(22) Date of filing: 10.04.2024
(51) Int. Cl.: G06T 7/11, G06T 7/194

(54) **GENERATING AND USING SYNTHETIC TRAINING DATA**

(71) Applicant: Koninklijke Philips N.V., 5656 AG Eindhoven (NL)
(72) Inventor: TSANDA, Artyom, Eindhoven (NL); KLINDER, Tobias, Eindhoven (NL); WISSEL, Tobias, 5656AG Eindhoven (NL); NICKISCH, Hannes, Eindhoven (NL); GRASS, Michael, Eindhoven (NL)
(74) Representative: Philips Intellectual Property & Standards

(57) **Abstract**

A computer-implemented method for generating synthetic training data for training a machine learning segmentation algorithm (1) of a software module, wherein the software module is configured for generating a segmentation mask of an image acquired by a medical imaging modality, the method comprising the steps of receiving a ground truth segmentation mask (4) identifying by means of labels at least one major structure generating synthetic image data (5) by filling the synthetic image data with image patterns according to the labels of the ground truth segmentation mask (4); downgrading the image quality of the synthetic image data (5) to obtain an input training image (6); and providing the input training image (6) together with the ground truth segmentation mask (4) as a training pair for the training data.

## Description

### FIELD OF THE INVENTION

The invention relates to a computer-implemented method for generating synthetic training data, a method for generating training weights, training weights, a software module, a use of a software module, and an image processing device.

### BACKGROUND OF THE INVENTION

Computed Tomography (CT) is a widely used medical imaging modality that typically images cross sections of a patient's body. During image acquisition the patient is irradiated with X-rays which are then measured by a detector unit after traversing the patient. Recovering information about the scanned volume as well as image reconstruction and semantic segmentation are important factors, e.g. when aiming to lower an X-ray dose level applied to the patient as well as to improve the final image quality. Semantic segmentation of images is a cornerstone of automated medical triaging. Due to recent advances in Artificial Intelligence (AI), the segmentation problem is often solved using deep learning models. However, machine learning algorithms have to be trained with training data during a training phase. This requires labelled data, namely pairs of images and ground truth (GT) segmentation masks, to derive an optimal segmentation model through an optimization (learning) procedure. In particular, large amounts of training data are often needed to achieve high quality AI-based segmentation tools. Data shortage leads to poor generalization of AI models (overfitting) and low segmentation performance.

The requirement for training data often hinders development, since the amount of available CT image data is limited, e.g. due to privacy regulations concerning the access to medical data, such as the General Data Protection Regulation (GDPR) of the European Union. Furthermore, due to negative effects of X-ray radiation on the human body, the production of CT image data is further limited. Labelling of data can be very time consuming and thus costly.

One way to tackle the data shortage is to use augmentations of training data to artificially increase data variability. The augmentations may represent for example rigid or deformable deformations, noise or blur corruptions, contrast or intensity variations. More advanced methods may rely on conditional adversarial networks (GANs) trained to learn the distribution of images conditioned to semantic labels. However, application of GANs is usually limited due to data requirements and training instabilities.

Hence, collecting a diverse training dataset thus takes a lot of effort and, for some problems, having a sufficient amount and quality of training data may simply not be feasible with state-of-the-art methods. The problem does not only relate to CT training data but, in particular, also to other imaging modalities where potentially harmful radiation, such as X-ray radiation, is applied. Furthermore, the problem of having difficulty to acquire a sufficient amount of training data (e.g. limited due to privacy reasons) can generally apply to image processing related to any imaging modality.

### OBJECT OF THE INVENTION

It is, therefore, an object of the invention to provide a method to better address the above-mentioned problems. Furthermore, it would be desirable to find a solution that allows a sufficient training of machine learning algorithms and to provide a sufficiently trained machine learning algorithm. In particular, it would be desirable to find a method that enables providing more training data.

### SUMMARY OF THE INVENTION

To better address this object, a method according to claim 1, a computer program according to claim 11, a method according to claim 12 and a data processing system according to claim 14 is provided. Advantageous embodiments are set out in the dependent claims. Any features, advantages or alternative embodiments described herein in relation to the claimed method are also applicable to the other claim categories and vice versa.

According to a first aspect, a computer-implemented method for generating synthetic training data for training a machine learning algorithm of a software module is provided. The software module is configured for image processing of images acquired by a medical imaging modality to generate a segmentation mask. The medical imaging modality may in particular be a medical imaging modality based on X-rays, such as computed tomography (CT) imaging. The method comprises the following steps: receiving a ground truth segmentation mask identifying, by means of at least one label, a major structure inside an image; generating synthetic image data (5) by filling the synthetic image data with image patterns according to the at least one label of the ground truth segmentation mask (4); downgrading the image quality of the synthetic image data (5) to obtain an input training image (6); and providing the input training image together with the ground truth segmentation mask as a training pair for the training data.

According to an embodiment of the invention, the image patterns used to fill the synthetic image data can be selected from a variety of options: (1) natural images, (2) natural video, wherein the time dimension of the natural video is translated into a third spatial dimension in order to obtain three-dimensional image data, (3) a constant value, (4) a range of values, corresponding to image data values of an organ labeled in the segmentation mask, and/or (5) image data selected from a medical image.

According to an embodiment of the invention, the dynamic range of at least one of the image patterns is adjusted based on the dynamic range of typical medical image data values based on a corresponding label in the segmentation mask for that image pattern.

Optionally, only a subset of segmentation labels in the segmentation mask is used in order to mimick missing organs in the image training data.

Advantageously, the inventive method allows to provide training data pairs of realistic downgraded versions of synthetic images (the input training image) with segmentation masks (i.e., the ground truth image). The inventive method is applicable to different medical imaging modalities, i.e. the training data can be used for training machine learning algorithms that are to generate segmentation masks obtained by any imaging modality. The inventive method can be particularly useful for imaging modalities comprising the application of X-ray radiation to a subject or patient, such as X-ray imaging or Computed Tomography (CT), since the amount of available training data for these imaging modalities is typically particularly limited due to the adverse effects of X-ray radiation on the human body, which limits the possibilities of acquiring image data for ethical reasons. However, the method may also be applicable for other medical imaging modalities, such as magnetic resonance imaging (MRI), ultrasound imaging, or positron emission tomography (PET). The method may also be useful for obtaining training data for training image guided therapy (IGT) methods.

The term "synthetic image" is to be understood broadly in the context of this application. It generally refers to an image that is at least partially generated by other means than by a medical imaging scan with an imaging modality, in particular generated by a software module. For example, a synthetic image may also be partially synthetic and partially obtained by an imaging modality. Further, a synthetic image may have been derived from images obtained by a medical imaging scan, but which have been processed, for example in order to downgrade the image quality, or in order to generally change the image appearance. The training pair may be provided such that it can be used for training, in particular, supervised training. Alternatively, it may be provided that the training pair is to be used for validation of a trained machine learning algorithm. In the context of this invention, this alternative may also be comprised by the term training data. Hence, the term "training data" may also comprise the provided use for validation purposes.

The training data can be used for training a machine learning algorithm of a software module. A machine learning algorithm may for example be a neural network (NN), in particular a convolutional neural network (CNN). In this context the term "software module" has to be understood broadly, it may generally describe a component of a software architecture that comprises one or several software modules. Optionally, the software module may also be the only software module of a software architecture. The software module is configured for segmentation of images acquired by a medical imaging modality. Hence, the software module may comprise program code configured for segmentation. In particular, the software module comprises the machine learning algorithm.

The synthetic image may be fully or partially obtained from natural image data. The term "natural image data" is to be understood broadly in the context of this invention and generally describes images that a human being might observe in the real world. For example, the natural images may show a landscape, an object or an animal or a part thereof. For example, the natural image may be a depiction of sand or a depiction of a part of a tiger. Natural image data may, in particular, be or comprise optical images taken with an optical camera, including an infrared camera, and including video streams. Thus, natural images may also comprise frames taken from optical/natural videos. As such, the term "natural image data" may describe image data that is not acquired by a medical imaging modality, in particular not by an imaging modality of the same kind as the medical imaging modality for which the training data is to be used. Surprisingly, it has been found, that training data generated from natural images can be used for achieving viable training results, hence rendering the provision of actual medical images unnecessary. Hence, when using natural image data, access to high-resolution imaging data, such as CT projection data acquired with high an X-ray dose, is not necessarily required. Advantageously, natural image data can typically be provided in large quantities and with high resolution. Prior to their application, the synthetic may be converted to a particular color coding corresponding to a typical color coding of the medical imaging modality, e.g. a grey scale. Additionally or alternatively, the training data based on the natural image data may also be used to complement training data based on images obtained by medical imaging modalities.

In order to obtain the input training image, the image quality of the synthetic image is downgraded. Hence, the input training image is a downgraded, or more realistic, version of the synthetic image. Downgrading may generally be understood to be any kind of decreasing of image quality and/or of perceivable image information. The downgrading may be chosen to correspond to one or several image degradations typically associated with the medical imaging modality. Hence, the downgrading may be chosen depending on what kind of medical imaging modality and/or what quality level of medical imaging modality is to be used. The downgrading may be thus, that the image quality of the downgraded image corresponds to the typical image quality of the images attainable by the medical imaging modality. Hence the training pair may be suitable to train the machine learning algorithm to segment the images from the medical imaging modality.

According to an embodiment, downgrading image quality comprises adding noise to the image data, adding image artifacts to the image data and/or lowering the resolution of the image data. When image artifacts are added, the training pair may be suitable for training of a machine learning algorithm to provide a segmentation mask even in the presence of image artifacts. In CT-related cases the image artifacts may, for example, be cone-beam artifacts. Adding noise may be used to produce training pairs for training a machine learning algorithm to provide a segmentation mask in the presence of noise. For example, noise may be added by adding noise with statistical characteristics typical for the imaging modality, e.g. statistical characteristics typical for CT images. Additionally or alternatively, additional downgrades may be applied. For example, in addition or alternatively to the above-mentioned downgrades, motion may be added to the image data. For example, motion can be generated either by means of using dynamic content from natural videos. The downgrading may comprise applying only one of the downgrades or a combination of several of the downgrades.

According to an embodiment, downgrading the image quality comprises: forward projecting the image data into a projection space of an artificially designed imaging modality, downgrading the image quality of the projected image data in the projection space, and reconstructing the projected and downgraded image data back into image space.

In the context of this invention, projection space is to be understood broadly. Projection space may describe any kind of image space that corresponds to raw image data as obtained by the artificially designed imaging modality, in particular image data as it is before image reconstruction. Projection space may also be termed as projection domain. For example, in the case of CT imaging, the projection space may be the imaging space comprising the X-ray projections as detected by the X-ray detector of the CT system. It has been found that downgrading the image quality in the projection space may lead to a more realistic image degradation than downgrading directly in image space. This is due to the fact that the downgrading is applied in a more "raw state" of the data, corresponding to the actual reconstruction in a real system, and therefore corresponds better to realistic image downgrades. By forward projecting the image back into image space, the artificial loss in quality is not quite as "obvious" for an image improvement algorithm. The algorithm therefore has to learn to handle and segment realistic images. For example, a more realistic loss of resolution or a more realistic noise may be simulated. Accordingly, the training data obtained via this embodiment may thus lead to better training effects, such as a more robust trained segmentation algorithm that.

According to an embodiment, in projection space, the image quality is downgraded by performing a low-dose simulation that introduces noise corresponding to the medical imaging modality. Medical imaging modalities may have their own characteristic types of noise discernible from other types of noise. For example, noise may have a characteristic distribution in frequency space. For different modalities, the power of noise for different frequencies may differ. Hence, in order to create realistic data, it may be advantageous to apply a corresponding noise typical for the imaging modality. The noise may be even more realistic when applied in projection space, i.e. corresponding to the noise of the raw data, instead of trying to apply noise in the reconstructed image.

According to an embodiment, the synthetic image is at least partially obtained from image data taken from a natural video, wherein the time dimension of the natural video is translated into a third spatial dimension in order to obtain three-dimensional image data. Advantageously, natural videos may provide high image resolutions and low noise levels and are thus well-suited for this purpose. The time dimension of the video (i.e. a third dimension) may be used to generate data for the third dimension of three-dimensional image data, i.e. a three-dimensional image volume. Using natural videos in this way may thus advantageously allow to generate synthetic training data even for three-dimensional volumes, with relatively low required effort. Prior to their application, the natural videos may be converted to a particular color coding corresponding to a typical color coding of the medical imaging modality, e.g. a grey scale.

According to an embodiment, the synthetic input image is generated by receiving a medical image obtained by the medical imaging modality or another medical imaging modality and replacing at least one part of the medical image with at least one image part taken from another image source, in particular from at least one natural image. Preferably several or all parts may be replaced. Accordingly, the ground truth image is partially synthetic and partially based on a real medical image. In particular, the ground truth image may retain the basic structures of the medical image, but replace the content of the structures with textures obtained from another image source, in particular from one or several natural images. Replacing parts of the medical image allows to provide a greater number of training data while still maintaining a realistic anatomical structure in the image. Hence based on a small number of available training data sets a larger number of training data sets can be generated. It has been found that using natural images can be particularly advantageous due to the typically more diverse fine structure and textures on natural images. Thus, a rich variety of data may be generated. The training with these partially substituted images can lead to even trained algorithms that are even more robust by profiting from the varied structures of the natural images.

According to an embodiment, regions outside the at least one segmentation mask are clustered together into at least one cluster region and wherein pixels or voxels within the same cluster region are attributed a constant pixel or voxel value, optionally the mean value of the original pixels or voxels within the cluster region. In many cases, segmenting every organ on the medical image may not be feasible. Thus, for the rest of the medical image, the clustering according to this embodiment can be applied. This may allow to even fill in the areas that are not segmented. For example, pixels or voxels in one cluster may be assigned the mean value within the cluster region. This may result in a piece-wise constant approximation of the non-segmented area. Advantageously, the assignment of pixel or voxel values may further allow a labelling of the corresponding region. Clustering and applying a new pixel/voxel value has the advantage that the connection to the original patient the image was taken from can be reduced. On the one hand, a more diverse training data set may thus be produced. On the other hand, the privacy rights of the original patient may thus be better protected.

According to an embodiment, the dynamic range of the at least one image part of the at least one natural image is adjusted based on the dynamic range of the medical image data within the segmentation mask. This embodiment may also be applied when the image part is taken from any other source, i.e., not from a natural image. Depending on the corresponding medical image and depending on the respective part, e.g. organ, that is segmented, the dynamic range of the original part of the medical image may be different. For example, some body parts may appear bright and other body parts may appear rather dark. Furthermore, the typical variety in brightness and/or contrast within different segmentations may be different. On the other hand, random natural images may have different dynamic ranges. Accordingly, by adjusting the dynamic range of the image part taken from the natural image, the outcome may be more realistic such that the synthetic image will have dynamic ranges that are comparable to real medical images. This may lead to better training results when training a machine learning algorithm with the corresponding training data. For example, in a first sub-step, the dynamic range of the medical image data within the segmentation mask may be calculated based on the original imaging data values. In a following sub-step, the dynamic range of the image part may be adjusted. For example, the adjustment may be provided by matching histograms of the dynamic ranges and/or by rescaling the dynamic range according to quantiles of the dynamic range distribution. Additionally or alternatively, the image part may be further adjusted. For example, the image part may be flipped, rotated and/or deformed. This may provide training data that are even more rich in variety.

According to an embodiment, prior to filling in the image data with image patterns, at least one property of the segmentation mask is changed within a predefined boundary. Changing a property of the segmentation mask may advantageously allow to provide a more varied dataset. For example, this way, a limited set of imaging data can be extended into a much bigger and richer one. A predefined boundary may be defined such that the change is still within realistic properties. In particular, the shape, position, orientation and/or size of the at least one segmentation mask may be changed. The position may be changed by shifting the segmentation mask within the medical image. The maximum allowable shift may be constricted, e.g. relative to the size of the segmentation or by an absolute value. The orientation of the segmentation mask may be changed by rotating the segmentation mask. The rotation may be restricted by a maximum allowable rotation, e.g. a certain value given in degree. The size of the segmentation mask may be changed by resizing the mask. The resizing may be restricted by a maximum allowable increase or decrease in size, e.g. relative to the original size of the segmentation mask. The shape of the segmentation mask may, for example, be changed by distorting the segmentation mask. It is possible to apply one, several or all of the changes of shape, position, orientation, and size. Further properties may be changed as, well, e.g. the dynamic range within the segmentation mask may also be adapted, e.g. by a percentile of the original dynamic range within the segmentation mask. The change may be performed randomly within the predefined boundary. It may be chosen randomly, which of the changes, i.e. comprising changes of shape, position, orientation, and/or size, may be applied. It may be chosen randomly, how many of the changes are applied.

According to an embodiment, prior to generating the synthetic image data, at least one property of the segmentation mask is changed within a predefined boundary, wherein in particular the shape, position, orientation and/or size of the at least one segmentation mask is changed.

According to another aspect of the invention, a method for generating training weights to be used in a software module comprising a machine learning algorithm is provided. The training weights are generated by training the machine learning algorithm with the synthetic training data as obtained according to the method for generating synthetic training data described herein. The machine learning algorithm may optionally be trained with additional training data, e.g. based on real medical image data and segmentation masks. The machine learning algorithm may be trained to correct cone-beam artifacts of CT image data. The machine learning algorithm may be trained to perform a deblurring of image data. The machine learning algorithm may be trained perform the deblurring in image space with reconstructed image data or in projection space, in particular with raw image data as obtained by the imaging device. Training data in projection space may be generated by forward projecting image data from image space into projection space. The machine learning algorithm may be trained to perform an up-sampling of the image data to a higher image resolution. The machine learning algorithm may be trained perform the up-scaling in image space with reconstructed image data or in projection space, in particular with raw image data as obtained by the imaging device. The machine learning algorithm may be trained to perform a motion correction of the image data. Motion in the training data may be generated by manipulating segmentation masks (e.g., shifting, rotating, and/or distorting the masks) or using dynamic content from natural videos.

According to another aspect of the invention, the training weights generated by the method for generating training weights as described herein are provided. Hence, the training weights may be the results of training the machine learning algorithm with the training data.

According to another aspect of the invention, a non-transitory storage medium having stored thereon the training weights generated by the method for generating training weights as described herein is provided. For example, the storage medium, and/or and storage medium mentioned herein, may be an optical storage medium, a magnetism-based storage medium, a magneto-electronic storage medium, a magneto-optical storage medium, or a solid-state medium, etc.

According to another aspect of the invention, a software module with a machine learning algorithm comprising the training weights as described herein is provided.

According to another aspect of the invention, a non-transitory storage medium having stored thereon a software module with a machine learning algorithm comprising training weights generated by the method for generating training weights as described herein is provided.

According to another aspect of the invention, a use of the software module as described herein and/or the training weights as described herein and/or the non-transitory storage medium having stored thereon the training weights as described herein for image processing of medical image data obtained by a medical imaging modality is/are provided.

Advantageously, since a greater amount of training data can be provided by using the synthetic training data, the quality of the trained machine learning algorithm of the software module can be better. Furthermore, it has been found, that using natural images as basis for training data as described herein, the robustness of the machine learning segmentation algorithm can be better, even when comparable amounts of training data are applied, which may be attributed to the more varied structural details of natural images. Hence, the provision of the synthetic training data can have an effect still even on the trained algorithm during its application.

The features and advantages of different embodiments can be combined. The features and advantages of one aspect of the invention, e.g., the method for generating synthetic training data, may be applied to the other aspects, e.g., the method for generating training weights, the training weights, the software module, the image processing device, the use, and/or the non-transitory storage mediums, and vice versa.

### BRIEF DESCRIPTION OF THE DRAWINGS

The invention shall now be illustrated by means of embodiments with reference to the attached drawings, in which:
Fig. 1. shows a flow diagram of a computer-implemented method for generating synthetic training data for training a machine learning segmentation algorithm according to an embodiment of the invention;
Fig. 2. shows a diagram of a computer-implemented method for generating synthetic training image data for training a machine learning algorithm of a software module;
Fig. 3. shows a flow diagram of a computer-implemented method for generating synthetic training data for training a machine learning segmentation algorithm, and a method of training weights using the training data;
Fig. 4. shows examples of training image data generated by a method according to an embodiment of the invention;
Fig. 5. shows segmentation results by a segmentation algorithm according to the invention and a ground truth segmentation mask

### DESCRIPTION OF EMBODIMENTS

Throughout the Figures, the same or corresponding features/elements of the various embodiments are designated with the same reference numbers.

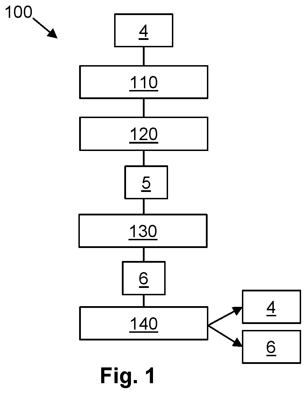

Fig. 1 shows a flow diagram 100 of a computer-implemented method for generating synthetic training data for training a machine learning segmentation algorithm 1 of a software module for image processing of images acquired by a medical imaging modality according to an embodiment of the invention. The method relies on a simulation of an actual acquisition and a known ground truth segmentation mask. In a first step 110, a ground truth segmentation mask 4 is received. In a second step 120, a synthetic image is generated based on the ground truth segmentation mask. In a further step 130, the image quality of the synthetic image 5 is downgraded in order to obtain an input training image 6. Downgrading may, for example, comprise one or several of adding noise to the image data, adding image artifacts to the image data, and lowering the resolution of the image data. The downgrading steps thus simulate the physical limitations of an actual image modality acquisition and therefore enforce prior knowledge about an actual acquisition achieving similar perceptual image quality as real images. In a further step 140, the input training image 6 is provided together with the ground truth segmentation mask 4 as a training pair.

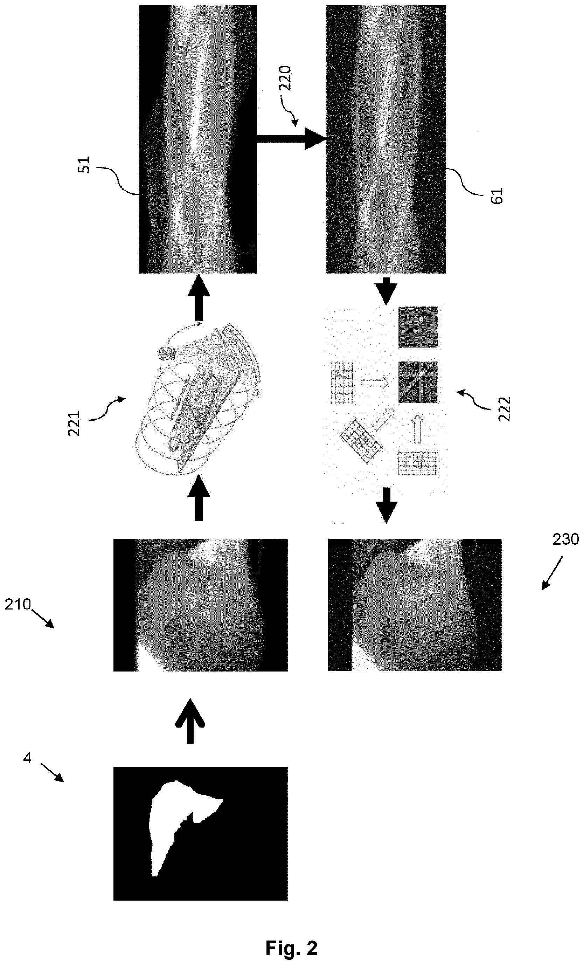

Fig. 2 shows a diagram of a computer-implemented method for downgrading the image quality of the synthetic image. In a first step 210, a synthetic image data 5 is received. In this example, the synthetic image 5 is based on a natural image 3 based on labels of a segmentation mask identifying a liver, applied to a cylinder, in which the liver is filled with a constant value, and the remainder of the cylinder is filled with values from artificial data, from random or non-random parts of a medical image and/or from natural images. Optionally, the image may be at least partially obtained from image data taken from a natural video, such that the time dimension of the natural video is translated into a third spatial dimension in order to obtain three-dimensional image data, i.e. a three-dimensional image volume. Optionally, the mage may be at least partially obtained from one or more constant values or from a data range, preferably corresponding to the organ labeled by the segmentation mask. In a further step 221, the image data is forward projected into a projection space of an artificially designed imaging modality, such that projected image data 51 is generated. The artificially designed imaging modality may, for example, be a computed tomography detector with any selected resolution. In a further step 220, the image quality of the projected image data 51 is downgraded in the projection space. This is done by down-sampling the projected image data 51 to an imaging modality with lower resolution. Furthermore, a low-dose simulation may be applied in order to introduce noise into the image data, to obtain noisy low-resolution projected image data 61. This embodiment may thus be applied to only reduce the resolution or only apply noise, or both. In a further step 222, the projected and downgraded image data 61 is reconstructed back into image space, in order to obtain an input training image 6. The input training image 6 is more blurred and/or noisier compared to the synthetic image data 5. In a further step 230, the input training image 6 is provided together with the ground truth segmentation mask 4 as a training pair for the training data.

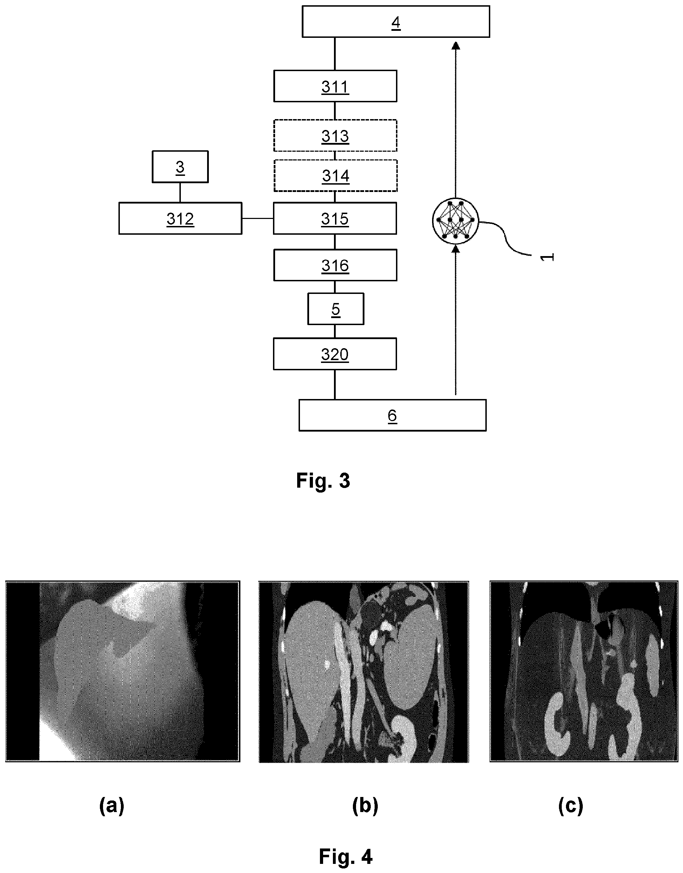

Fig. 3 shows a flow diagram of a computer-implemented method for generating synthetic training data for training a machine learning algorithm 1 of a software module for image processing of images acquired by a medical imaging modality according to another embodiment of the invention. In a first step 311, a ground truth segmentation mask 4 obtained by the medical imaging modality or by another medical imaging modality is received.

Alternatively, a segmentation method using a convolutional neural network (CNN) as known in the state of the art may be applied on a medical image to generate the ground truth segmentation mask 4. The step of segmenting may be performed according to approaches as known in the state of the art. In particular, the approach may be based on the application of trained convolutional networks. An example, of a segmentation approach that may be applied here similarly or with variations is TotalSegmentator as published by Jakob Wasserthal et al. in "TotalSegmentator: robust segmentation of 104 anatomical structures in CT images", arXiv:2208.05868 [eess.IV], 2022. Accordingly, it is possible to segment nearly all organs in the human body. This approach can be most beneficial when multiple segmentations, preferably as many segmentations as possible, are applied. Applying more segmentations and thus replacing more parts of the images can lead to more varied training data and thus better training results. However, the method may already be beneficial when applied with only a few or even only one segmentation.

Furthermore, in another step 312, image patterns, such as artificial or natural image data, or (random or non-random) parts of medical images, are obtained. The natural images 3 may be augmented and/or rescaled. Augmenting may, for example, comprise flipping, rotation, and/or deformation. In a further optional step 313, a selection of labels of the segmentation masks is made. For example, some labels may be randomly omitted to broaden the variety in the training data, to simulate mimicking missing organs.. In another example, the ground truth segmentation mask 4 may be provided from a database or generated by manual labelling of a medical image from the same or a different image modality. Optionally, in an optional step 314, at least one property of the respective segmentation masks 4 may be changed within a predefined boundary. For example, the shape, position, orientation and/or size of the segmentation masks 4 may be changed. In a further step 315, the dynamic range of the one or several natural images 3 or parts of natural images 3 may be adjusted based on the dynamic range of the medical image data within the segmentation masks 4, respectively. For example, the dynamic range within the segmentation mask 4 may be calculated based on the original imaging values and the dynamic range of the natural image 3 or part of the natural image 3 may then be adjusted based on this calculation. For example, it may be adjusted by matching histograms or via a rescaling according to quantiles. In a further step 316, the image data of the medical image corresponding to at least some of the labels of the segmentation mask 4 are replaced with image patterns obtained from the artificial, medical, or natural images 3 or parts thereof. Preferably, choosing the natural image 3, adjusting the dynamic range, and replacing the region of the segmentation mask 4 is applied for each label of the segmentation mask 4 separately. If there are regions outside the segmentation mask(s) 4, for example if the segmentation mask covers only part of the image, these non-segmented regions may be clustered together into at least one cluster region and pixels or voxels and similarly filled in with artificial, medical, or natural images 3 and/or constant data. This may be an option, if, for example, segmenting every organ is not feasible in some cases. For example, the constant pixel or voxel value may be the mean value of the original pixels or voxels within the cluster region. In particular if applying several cluster regions, this may result in a piece-wise constant approximation of the non-segmented area. The image that is thus obtained by replacing parts of the medical image with image patterns, can then be used as synthetic image data 5.In a further step 320, the image quality of the synthetic image data 5 is downgraded to obtain an input training image 6. It has been found that the resulting images are high quality image training data 6 consistent with real images that would have been obtained by the respective imaging modality. The result resembles a real CT image due to natural noise texture and global structures enforced by segmentation masks but filled with arbitrary local structures. The whole process can be repeated multiple times for the same set of selected labels. Finally, in further step 330, the input training image 6 is provided together with the ground truth image 5 as a training pair for the training data.

Fig. 3 also shows a method for generating training weights to be used in a software module comprising a machine learning segmentation algorithm 1. The training weights are generated by training the machine learning segmentation algorithm 1 with the synthetic training data comprising a training pair of an input training image 6 and a ground truth segmentation mask image 4. Accordingly, the machine learning algorithm 1 can be trained with this training pair and more equivalent training pairs.

Fig. 4 shows examples of input training images 6 that are generated by a method according to an embodiment of the invention. The first image (a) shows a computed tomography input training image 6 which is generated by CT simulation (forward-projection using a geometry of choice, e.g., slice-wise axial or helical, and simulation of CT noise assuming a certain tube current profile, and subsequent image reconstruction) of a synthetic image 5 of a constant-valued liver segmentation pasted into a cylinder filled with values from natural images. In the second image (b), the input training image is based on a synthetic image 5 made using constant values for the various segmentation labels in the segmentation mask 4. In the third image (c), the input training image is based on a downgraded version of a synthetic image 5 made using natural images to fill in the various segmentation labels. Before pasting the natural image data into the CT scan, the dynamic range may have been adjusted based on the actual CT values within the respective segmentation mask. Thus, an input training image that is different with respect to the internal structure of the organs, yet has a realistic overall structure and dynamic range, has been provided. Accordingly, the new image is suitable to be used as part of a set of training data for training a machine learning segmentation algorithm 1. The resulting input training images are high quality CT images consistent with real images. Through simulation of different CT attributed degradations one can get a very suitable pair of images for further learning-based methods, such as CNNs.

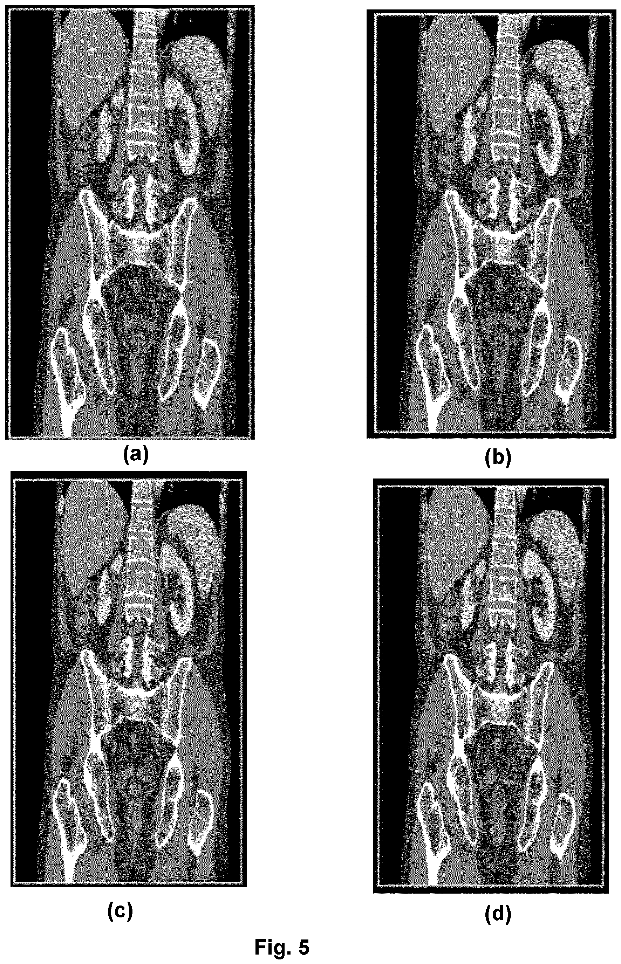

Synthetic training data, generated with a method according to an embodiment of the invention, was tested to verify the usefulness of the inventive approach. Segmentation models were trained using several strategies for data generation corresponding to the 3 images shown in Fig. 4. Fig. 5 shows the results of the segmentation algorithm 1 segmenting the liver on a CT scan, when tested on a real CT scan. Fig. 5(d) shows the ground truth segmentation mask, and Fig. 5(a) shows a liver segmentation by a segmentation algorithm trained using input training images which are based on synthetic images generated by filling the liver area with a constant value, and the non-liver areas with natural images. Fig. 5(b) shows a liver segmentation by a segmentation algorithm 1 trained with input training images which are based on synthetic images generated from segmentation masks with multiples labels, the areas of which have been filled with random constant values (one value per area). Fig. 5(c) shows a liver segmentation by a segmentation algorithm 1 trained with input training images which are based on synthetic images generated from segmentation masks with multiples labels, the areas of which have been filled with respective rescaled natural videos.

The above discussion is intended to be merely illustrative of the present method and system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for generating synthetic training data for training a machine learning algorithm (1) of a software module,
wherein the software module is configured for generating a segmentation mask of an image acquired by a medical imaging modality,
the method comprising the following steps:
- receiving a ground truth segmentation mask (4) comprising at least one label identifying a major structure;
- generating synthetic image data (5) by filling the synthetic image data with image patterns according to the at least one label of the ground truth segmentation mask (4);
- downgrading the image quality of the synthetic image data (5) to obtain an input training image (6); and
- providing the input training image (6) together with the ground truth segmentation mask image (4) as a training pair for the training data.

2. The method according to claim 1, wherein the image patterns used to fill the synthetic image data are selected from:
- natural images,
- a natural video, wherein the time dimension of the natural video is translated into a third spatial dimension in order to obtain three-dimensional image data,
- a constant value,
- a range of values, corresponding to image data values of an organ labeled in the segmentation mask, and
- image data from a medical image.

3. The method according to any one of claims 1 to 2,
wherein the dynamic range of at least one of the image patterns is adjusted based on the dynamic range of typical medical image data values based on a corresponding label in the segmentation mask for that image pattern.

4. The method according to any of claims 1 to 3, wherein only a subset of segmentation labels in the segmentation mask is used in order to mimick missing organs in the image training data.

5. The method according to any of claims 1 to 4,
wherein downgrading image quality comprises at least one of
- adding noise to the synthetic image data (5),
- adding image artifacts to the synthetic image data,
- lowering the resolution of the synthetic image data,
- forward projecting the synthetic image data into a projection space of an artificially designed imaging modality, downgrading the image quality of the projected image data (51) in the projection space, preferably to an image resolution obtainable by the medical imaging modality, and reconstructing the projected and downgraded image data (61) back into image space.

6. The method according to claim 5,
wherein, in projection space, the image quality is downgraded by performing a low-dose simulation that introduces noise corresponding to the medical imaging modality.

7. The method according to any one of the preceding claims,
wherein the ground truth segmentation mask (4) is generated by receiving a medical image obtained by the medical imaging modality or another medical imaging modality and segmenting the medical image.

8. The method according to any one of claims 1 to 7,
wherein, prior to the generation of the synthetic data image, , at least one property of the segmentation mask (10) is changed within a predefined boundary, wherein in particular the shape, position, orientation and/or size of the at least one segmentation mask (10) is changed.

9. A method for generating training weights to be used in a software module comprising a machine learning algorithm (1),
wherein the training weights are generated by training the machine learning algorithm (1) with the synthetic training data as obtained by any one of the preceding claims.

10. The training weights generated by the method according to claim 9.

11. A software module with a machine learning algorithm (1) comprising the training weights according to claim 10.

12. A use of the software module according to claim 11 and/or of the training weights according to claim 10 for image processing of medical image data obtained by a medical imaging modality.

13. An image processing device comprising the software module according to claim 12.
